**Europäisches Patentamt**

**European Patent Office**

**Office européen des brevets**

(19)

(11) Publication number: **0 086 950**
**B1**

# (12) EUROPEAN PATENT SPECIFICATION

(45) Date of publication of patent specification: **07.09.88**

(21) Application number: **83100395.9**

(22) Date of filing: **18.01.83**

(51) Int. Cl.⁴: **G 05 B 19/407, B 25 J 9/00**

(54) Method of controlling an industrial robot.

(30) Priority: **19.02.82 JP 24361/82**

(43) Date of publication of application:
**31.08.83 Bulletin 83/35**

(45) Publication of the grant of the patent:
**07.09.88 Bulletin 88/36**

(84) Designated Contracting States:
**DE FR**

(56) References cited:
**EP-A-0 037 704**
**DE-A-2 330 054**
**GB-A-2 027 938**
**US-A-3 920 972**

(73) Proprietor: **Hitachi, Ltd.**
**5-1, Marunouchi 1-chome**
**Chiyoda-ku Tokyo 100 (JP)**

(72) Inventor: **Sugimoto, Koichi**
**Wakamiyahaitsu 6-304 760-1, Yamashita**
**Hiratsuka-shi (JP)**
Inventor: **Koizumi, Kiyohide**
**7-24, Minamirokugo-2-chome**
**Ota-ku Tokyo (JP)**
Inventor: **Hamada, Toyohide**
**Sendaso 203 3-8-7, Shimoseya**
**Seya-ku Yokohama (JP)**
Inventor: **Arai, Shinichi**
**22-27, Honkomagome-6-chome**
**Bunkyo-ku Tokyo (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

## Description

Background of the invention
(1) Field of the invention

This invention relates to methods of controlling industrial robots in driving same, and more particularly it is connected with a method of controlling an industrial robot so as to cause a hand of the industrial robot to move along a predetermined path of travel.

(2) Description of the prior art

In one method of controlling an industrial robot known in the art, such as the one disclosed in U.S. Patent Specification No. 3,909,600, an interval of points taught as by teaching is interpolated at regular intervals to give an indicated speed to a robot hand, then there is calculated displacements of actuators for the robot corresponding to the points of interpolation obtained at each time, and thereafter the displacements of the actuators obtained by calculation are compared with actual displacements of the actuators to determine their deviations, so as to control the driving of the actuators to thereby control the movement of the robot hand. Stated differently, the speeds at which the actuators are to be driven are obtained based on the indicated speed of the robot hand to thereby drive the robot hand to move same at a predetermined speed along a predetermined path of travel.

In this method of control, the speed at which each actuator is driven is determined based on the speed of movement of the robot hand. Because of this, the speed at which the actuator is driven might exceed its capability depending on the posture of the robot and the robot hand might become inoperative as a result of an error being assumed to have been committed. When this situation occurs, the robot itself would become uncontrollable and could not be driven. This would not only reduce robot's operation efficiency but also raise a problem with regard to the quality control of the article handled by the robot or safety management for robot operations.

Further, US—A—3 920 972 discloses a method and apparatus of controlling an industrial robot for moving a hand thereof along a predetermined path of travel revising the velocity of said movement in such a manner that the velocities of each actuator for driving the said hand do not exceed allowable maximum values. In performing said known method a computer-operated robot arm is programmed by means of manually operable controls whereby a command motion of said arm is executed relative to a teaching coordinate system.

When a controlled element is positioned at a predetermined point, further manual controls are operable for generating input signals. Said signals and informations are stored in a memory in order to repeat the robot arm operation cycle.

This invention has as its object the provision of a method of controlling an industrial robot to move a hand of the robot along a predetermined path of travel by revising the speed of each actuator if instructions given to the actuators driven for moving the robot hand contain speeds that exceed the capabilities of the actuators, so as to allow the robot hand to move along the predetermined path of travel in an accurate and fail safe manner in a smooth motion without interruption.

The said object according to the invention is solved by means of the features of the characterising portion of the claim.

One outstanding characteristic of the invention is that there are calculated the command velocities of the actuators for the robot based on the velocity of a robot hand moving along a predetermined path of travel, and when the command velocity of any single actuator exceeds its ability, the command velocities of the actuators are revised as to bring the command velocities of all the actuators within their capabilities to thereby revise the velocity of the robot hand moving along the path of its travel.

Another outstanding characteristic is that there may be calculated the command velocity of each actuator based on the position and posture of the robot hand and Jacobian matrix.

Brief description of the drawings

Fig. 1 is a perspective view of an industrial robot and a control apparatus therefor, showing their constructions;

Fig. 2 is a view in explanation of one example of the position and posture of the robot hand at the current point and the target point; and

Fig. 3 is a flow chart in explanation of the control method according to the invention.

Description of the preferred embodiment

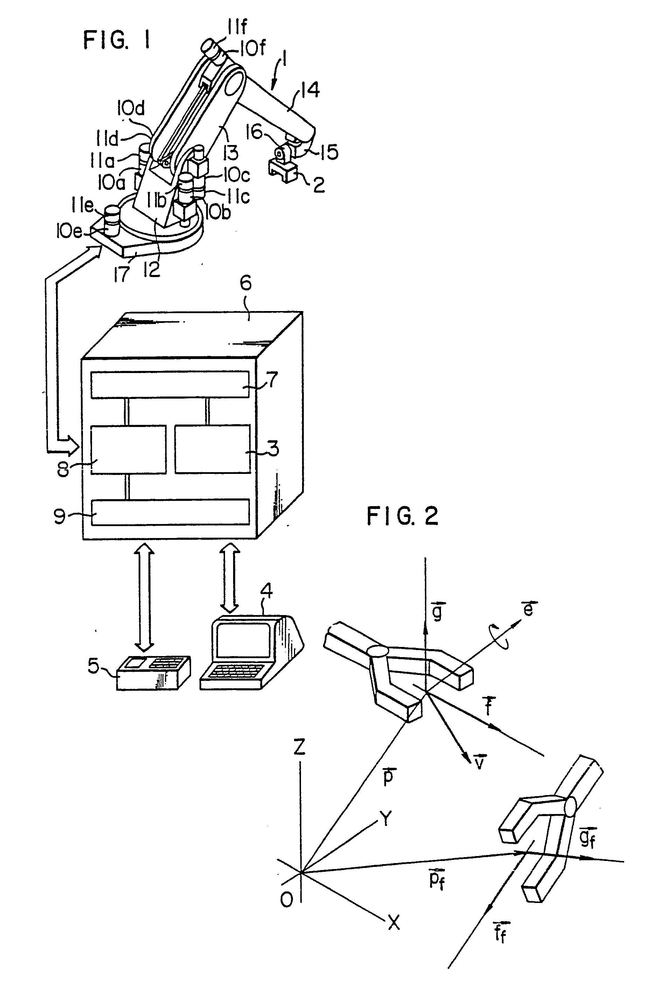

A preferred embodiment of the invention will now be described by referring to the accompanying drawings. Fig. 1 is a perspective view of an industrial robot for which the method according to the invention is intended and control apparatus for the industrial robot. The industrail robot designated by the reference numeral 1 belongs to one type of the articulated type industrial robot having six degrees of freedom. The numeral 12 designates a swivelling pedestal mounted for swivelling movement about a vertical axis with respect to a base 17, which is connected through speed reducing means to a motor (actuator) 10e. The numeral 13 designates an upper arm supported by the swivelling pedestal 12 for pivotal movement about a horizontal axis, which is connected through speed reducing means to a motor (actuator) 10b. The numeral 14 designates a forearm supported at a forward end of the upper arm 13 for rotation about a horizontal axis, which is connected through a parallel linkage to an output shaft connected through speed reducing means to a motor (actuator) 10a. The numeral 15 designates a first wrist member connected to a forward end of the forearm 14 with two degrees of freedom, which is connected through a parallel linkage to output shafts connected through speed reducing means to motors (actuators) 10c and 10d supported on the swivelling pedestal 12. The numeral 16 designates a second wrist member connected to a forward end of the first wrist member 15 with one degree of freedom, which is connected through shafts and gears to an output shaft connected through speed reducing means to a motor (actuator) 10f supported on the forearm 14. The numeral 2 designates a hand mounted on a forward end of the second wrist member 16 for gripping an article. It is to be understood that the industrial robot in which the control method according to the invention can have application is not limited to the specific type of industrial robot shown in Fig. 1 and that the method according to the invention can have application in any type of industrial robot.

In teaching the robot 1 a movement of its hand 2, the positions and velocities of the hand 2 are given by a teaching console 4 or the robot 1 is operated by means of an operation box 5 to effect positioning of the hand 2 in a predetermined position. Positions of the hand 2 are obtained through displacement sensors 11a, 11b, 11c, 11d, 11e and 11f connected to the actuators 10a, 10b, 10c, 10d, 10e and 10f respectively. In controlling the robot 1, interpolation is effected so that the distance between the positions given will be covered by an indicated velocity to obtain the position to be occupied by the hand 2 for each sampling time. The amounts of control for the actuators 10a, 10b, 10c, 10d, 10e and 10f are decided based on the obtained data.

A preferred embodiment of the invention will now be described by referring to a robot with six degrees of freedom. Assume that, as shown in Fig. 2, the positions and postures of the hand 2 serving as a target are given as a position vector $\vec{p_f}$ with respect to the fixed coordinate of the reference point of the hand 2 and as unit vectors $\vec{f_f}$ and $\vec{g_f}$ of two reference axes of the hand 2, and that the magnitude $v$ of a translational movement of the hand 2 is indicated. The position and posture $\vec{p}, \vec{f}, \vec{g}$ of the hand 2 at time $t$ are decided by displacements $\theta_1, \theta_2, \ldots \theta_6$ of the actuators 10a—10f, as follows:

$$\vec{p} = \vec{p}(\theta_1, \theta_2, \ldots \theta_6) \tag{1}$$

$$\vec{f} = \vec{f}(\theta_1, \theta_2, \ldots \theta_6) \tag{2}$$

$$\vec{g} = \vec{g}(\theta_1, \theta_2, \ldots \theta_6) \tag{3}$$

If the hand 2 moves at this time toward the target point $\vec{p_f}$ at the indicated translational velocity $v$, then the distance covered by the movement of the hand 2 in a sampling time interval T is as follows when linear interpolation is performed:

$$\Delta\vec{p} = \frac{vT}{|\vec{p_f} - \vec{p}|}(\vec{p_f} - \vec{p}) \tag{4}$$

Meanwhile a change in the posture is given by a rotation about the unit vector $\vec{e}$ which is defined by the following equations:

(i) When $\vec{f_f} = \vec{f}, \vec{g_f} = \vec{g}$,

$$\vec{e} = 0 \tag{5}$$

(ii) When $\vec{f_f} = \vec{f}, \vec{g_f} \neq \vec{g}$,

$$\vec{e} = \vec{f} \tag{6}$$

(iii) When $\vec{f_f} \neq \vec{f}, \vec{g_f} = \vec{g}$,

$$\vec{e} = \vec{g} \tag{7}$$

(iv) When $(\vec{f_f} - \vec{f}) \times (\vec{g_f} - \vec{g}) = 0$,

$$\vec{e} = (\vec{f_f} \times \vec{g_f}) \times (\vec{f} \times \vec{g}) / |(\vec{f_f} \times \vec{g_f}) \times (\vec{f} \times \vec{g})| \tag{8}$$

(v) When other condition exists,

$$\vec{e} = (\vec{f_f} - \vec{f}) \times (\vec{g_f} - \vec{g}) / |(\vec{f_f} - \vec{f}) \times (\vec{g_f} - \vec{g})| \tag{9}$$

The angle of rotation $\theta$ of the hand 2 about the vector $\vec{e}$ from $\vec{f}, \vec{g}$ to $\vec{f_f}, \vec{g_f}$ is given by the following equations:

$$\theta = 2\tan^{-1} \frac{\vec{e} \cdot (\vec{f} \times \vec{f_f})}{\vec{f} \cdot \vec{f_f} - 2(\vec{e} \cdot \vec{f})^2 + 1}$$

$$= 2\tan^{-1} \frac{\vec{e} \cdot (\vec{g} \times \vec{g_f})}{\vec{g} \cdot \vec{g_f} - 2(\vec{e} \cdot \vec{g})^2 + 1} \tag{10}$$

Thus the angle of rotation $\Delta\theta$ during the time interval T is given by the following equation:

$$\Delta\theta = \frac{vT}{|\vec{p_f} - \vec{p}|}\theta \tag{11}$$

so that the translational velocity $\vec{v}$ and the rotational velocity $\vec{w}$ of the hand 2 have the following relations;

$$\vec{v} = \Delta\vec{p}/T = \frac{v}{|\vec{p_f} - \vec{p}|}(\vec{p_f} - \vec{p}) \tag{12}$$

$$\vec{w} = \Delta\theta\vec{e}/T = \frac{2v\vec{e}}{|\vec{p_f} - \vec{p}|}\tan^{-1}\frac{\vec{e} \cdot (\vec{g} \times \vec{g_f})}{\vec{g} \cdot \vec{g_f} - 2(\vec{e} \cdot \vec{g})^2 + 1} \tag{13}$$

The relation between the velocities $\dot{\theta}_1, \dot{\theta}_2, \ldots \dot{\theta}_6$ of the actuators and $\vec{v}, \vec{w}$ is linear and can be expressed as follows by the Jacobian matrix J of 6×6:

$$\begin{bmatrix} \vec{v} \\ \vec{w} \end{bmatrix} = J \begin{bmatrix} \dot{\theta}_1 \\ \dot{\theta}_2 \\ \cdot \\ \cdot \\ \cdot \\ \dot{\theta}_6 \end{bmatrix} \tag{14}$$

From this, the velocities of the actuators are decided as follows:

$$\begin{bmatrix} \dot{\theta}_1 \\ \dot{\theta}_2 \\ \cdot \\ \cdot \\ \cdot \\ \dot{\theta}_6 \end{bmatrix} = J^{-1} \begin{bmatrix} \vec{v} \\ \vec{w} \end{bmatrix} \qquad (15)$$

One has only to effect control of the actuators by using these values. Some of the velocities $\dot{\theta}_1$, $\dot{\theta}_2, \ldots \dot{\theta}_6$ of the actuators decided as aforesaid may exceed the abilities of the actuators. When this is the case, a constant $a$ smaller than unity may be applied to equation (15) to obtain the following equation:

$$\begin{bmatrix} a\dot{\theta}_1 \\ a\dot{\theta}_2 \\ \cdot \\ \cdot \\ \cdot \\ a\dot{\theta}_6 \end{bmatrix} = J^{-1} \begin{bmatrix} a\vec{v} \\ a\vec{w} \end{bmatrix} \qquad (16)$$

so as to avoid $a\dot{\theta}_i$ ($i=1\infty6$) exceeding the abilities of the actuators. Since $\vec{v}, \vec{w}$ are in proportion to v, an operation performed in accordance with equation (16) means that the indicated velocity v has been revised to av ($<$v). By bringing the velocities of the actuators to $a\dot{\theta}_i$ ($i=1\infty6$), it is possible to effect control of the hand 2 of the robot 1 to move along the predetermined path of travel without the velocities exceeding the abilities of the actuators.

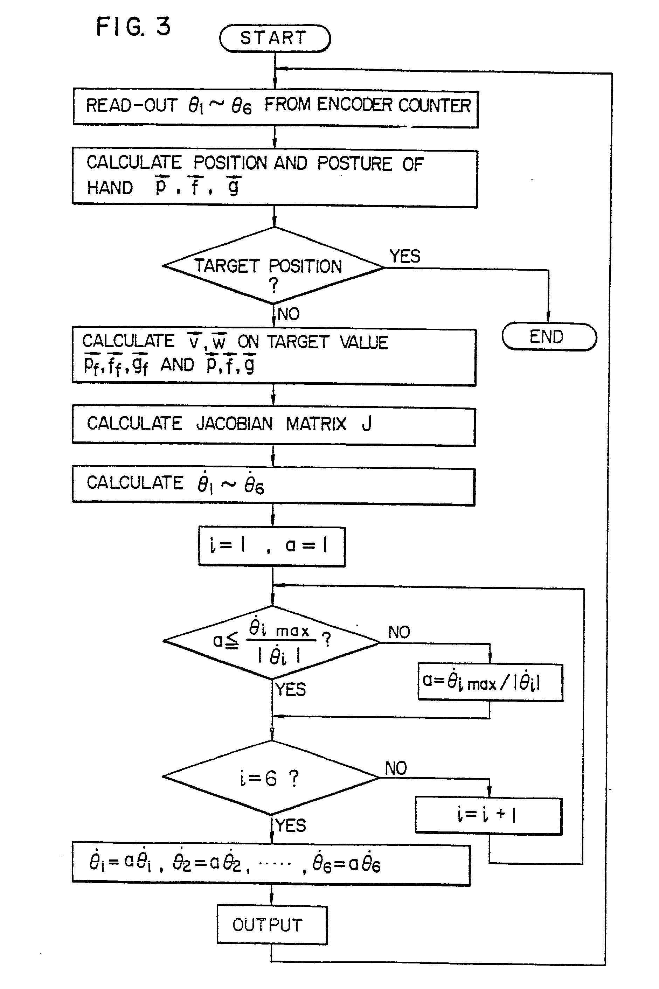

The aforesaid method of control can be shown in a flow chart shown in Fig. 3. First, a joint displacement $\dot{\theta}_i$ of each actuator is read out from an encoder of each actuator, and the current position and posture $\vec{p}, \vec{f}, \vec{g}$ of the robot hand 2 are calculated by equations (1), (2) and (3). In the event that the current position p, f, g does not coincide with a target position $\vec{p}_f, \vec{f}_f, \vec{g}_f, \vec{v}$ and $\vec{w}$ are calculated from $\vec{p}, \vec{f}, \vec{g}, \vec{p}_f, \vec{f}_f, \vec{g}_f$ by equations (12) and (13). Then Jacobian matrix J is calculated and a velocity $\dot{\theta}_i$ ($i=1\infty6$) of each actuator is obtained from equation (15). Each velocity is checked so that the velocity $\dot{\theta}_i$ ($i=1\infty6$) of each acuator obtained in this way does not exceed an allowable maximum velocity $\dot{\theta}_{imax}$ ($i=1\infty6$) of each actuator. When the allowable maximum velocity is exceeded, a value smaller than unity is given to the constant $a$ and the velocity $\dot{\theta}_i$ ($i=1\infty6$) is multiplied by the constant $a$ to produce a velocity $a\dot{\theta}_i$ ($i=1\infty6$) as an output, so that the angular velocities of all the actuators can be brought to a level below the allowable maximum velocity $\dot{\theta}_{imax}$ ($i=1\infty6$).

The calculation described hereinabove is done by means of an arithmetic circuit shown in Fig. 1. More specifically, the joint velocity $\dot{\theta}_i$ of the robot 1 is calculated by the method of control according to the invention by means of an arithmetic unit 3 based on the current position of the hand 2 obtained by calculation from the target value given by the teaching console 4 or the operation box 5 and the joint displacement $\theta_i$ of the robot 1. The joint velocity $\dot{\theta}_i$ obtained is supplied as an output to a servo circuit 9 as a velocity instruction. The servo circuit 9 effects control of the actuator 10 mounted on a joint so that its velocity is brought to the value instructed.

In the embodiment shown and described hereinabove, calculation has been described as being done by using Jacobian matrix. It is to be understood that the same calculation may be done to effect control of a robot by calculating a joint displacement based on the target position of its hand to utilize the deviation of the joint displacement obtained by calculation from the actual joint displacement for purposes of controlling the robot. The same applies to a robot with degrees of freedom of below five.

In effective interpolation from the current position toward the target point, an arbitrarily selected curve, such as an arc, may be used to effect interpolation. When the velocity of the hand moving along the path of its travel can be calculated as a function of the target point as by arc interpolation as expressed by equations (12) and (13), the method of control according to the invention can be used as it is.

From the foregoing description, it will be appreciated that the invention enables the velocity of the hand of the robot to be revised in conformity with the ability of the actuator as compared with the prior art in which, when an indicated velocity for driving an actuator exceeds the ability of the actuator, a decision is given that an error has been committed and operation of the robot has been rendered impossible.

**Claims**

1. A method of controlling an industrial robot for moving a hand provided on a fore end of the robot along a predetermined path of travel in such a manner that the velocities of hand-operating actuators do not exceed an allowable maximum value, characterized by

a first step of reading a present displacement of each of a plurality of actuators for moving the hand;

a second step of calculating, at present time, a present position vector $\vec{p}$ indicating a present position of the hand and present posture unit vectors $\vec{f}, \vec{g}$ indicating a present posture of the hand based on the present displacement of the actuators;

a third step of providing a sampling time interval T for controlling the hand;

a fourth step of providing a magnitude V of a translational movement of the hand;

a fifth step of providing a target position vector $\vec{p}_f$ indicating a target position of the hand and target posture unit vectors $\vec{f}_f, \vec{g}_f$ indicating a target posture of the hand;

a sixth step of calculating an estimated translational vector $\vec{\Delta p}$ indicating an estimated translational movement of the hand from the present position toward the target position during the sampling time interval T, an estimated rotation unit vector $\vec{e}$ indicating an axis of rotation of the hand from the present posture toward the target posture and an estimated rotation angle $\Delta\theta$ of the hand around the rotation unit vector $\vec{e}$ from the present posture toward the target posture during the sampling time interval T, by the following relationships;

$$\vec{\Delta p} = \frac{VT}{|\vec{p_t} - \vec{p}|}(\vec{p_t} - \vec{p})$$

$$\vec{e} = (\vec{f_t} - \vec{f}) \times (\vec{g_t} - \vec{g})/|(\vec{f_t} - \vec{f}) \times (\vec{g_t} - \vec{g})|$$

$$\Delta\theta = \frac{2VT}{|\vec{p_t} - \vec{p}|} \tan^{-1} \frac{\vec{e} \cdot (\vec{g} \times \vec{g_t})}{\vec{g} \cdot \vec{g_t} - 2(\vec{e} \cdot \vec{g})^2 + 1}$$

a seventh step of calculating a command velocity of each of the actuators based on the estimated translational vector $\vec{\Delta p}$, estimated rotation unit vector $\vec{e}$ and estimated rotation angle $\Delta\theta$;

an eighth step of calculating a revised command velocity of each of the actuators by reducing the command velocity of each of the actuators by a same rate so that any one of the revised command velocities of the actuators does not exceed a predetermined maximum allowable velocity of a concerned actuator; and

a ninth step of driving each of the actuators with the revised command velocity.

2. A method of controlling an industrial robot as claimed in claim 1, wherein said seventh step comprises the steps of:

providing a Jacobian matrix to be used in calculating translational and rotational velocities of the hand based on velocities of the actuators;

calculating an estimated translational velocity vector $\vec{v}$ indicating an estimated velocity of a translational movement of the hand from the present position toward the target position and a rotational velocity vector $\vec{w}$ indicating an estimated velocity of a rotational movement of the hand from the present posture toward the target posture, by the following relationships:

$$\vec{v} = \vec{\Delta p}/T, \quad \vec{w} = \Delta\theta\vec{e}/T$$

and

calculating the command velocity of each of the actuators based on the estimated translational and rotational velocities $\vec{v}, \vec{w}$ of the hand by using an inverse matrix of said Jacobian matrix.

3. A method of controlling an industrial robot as claimed in claim 1, wherein said seventh step comprises the steps of:

calculating an estimated position vector $\vec{p}'$, and estimated posture unit vectors $\vec{f}', \vec{g}'$ indicating an estimated position and an estimated posture of the hand after the sampling time interval T by the following relationships:

$$\vec{p}' = \vec{p} + \vec{\Delta p}, \quad (\vec{f}', \vec{g}') = \Delta\theta\vec{e} \times (\vec{f}, \vec{g})$$

calculating estimated displacements of the actuators after the sampling time interval T based on the estimated position vector $\vec{p}'$ and estimated posture unit vectors $\vec{f}', \vec{g}'$;

calculating, for each of the actuators, a difference between the estimated displacement and the present displacement; and

calculating the command velocity of each of the actuators by dividing said difference by the sampling time interval T.

4. A method of controlling an industrial robot as claimed in any one of claims 1 to 3, wherein said fourth step comprises the steps of:

providing a projected translational velocity V of the hand; and

calculating the projected translational distance VT by multiplying the projected translational velocity V by the sampling time interval T.

5. An apparatus for controlling an industrial robot so that a hand provided on a fore end of the robot moves along a predetermined path of travel in such a manner that the velocities of hand-operating actuators do not exceed an allowable maximum value comprising:

first means for reading a present displacement of each of a plurality of actuators for moving the hand;

second means for calculating, at present time, a present position vector $\vec{p}$ indicating a present position of the hand and present posture unit vectors $\vec{f}, \vec{g}$ indicating a present posture of the hand based on the present displacements of the actuators;

third means for providing a sampling time interval T for controlling the hand;

fourth means for providing a magnitude V of a translational movement of the hand;

fifth means for providing a target position vector $\vec{p_t}$ indicating a target position of the hand and target posture unit vectors $\vec{f_t}, \vec{g_t}$ indicating a target posture of the hand;

sixth means for calculating an estimated translational vector $\vec{\Delta p}$ indicating an estimated translational movement of the hand from the present position toward the target position during the sampling time interval T, an estimated rotation unit vector $\vec{e}$ indicating an axis of rotation of the hand from the present posture toward the target posture and an estimated rotation angle $\Delta\theta$ of the hand around the rotation unit vector $\vec{e}$ from the present posture toward the target posture during the sampling time interval T, by the following relationships:

$$\vec{\Delta p} = \frac{VT}{|\vec{p_t} - \vec{p}|}(\vec{p_t} - \vec{p})$$

$$\vec{e} = (\vec{f_t} - \vec{f}) \times (\vec{g_t} - \vec{g})/|(\vec{f_t} - \vec{f}) \times (\vec{g_t} - \vec{g})|$$

$$\Delta\theta = \frac{2VT}{|\vec{p_t} - \vec{p}|} \tan^{-1} \frac{\vec{e} \cdot (\vec{g} \times \vec{g_t})}{\vec{g} \cdot \vec{g_t} - 2(\vec{e} \cdot \vec{g})^2 + 1}$$

seventh means for calculating a command velocity of each of the actuators based on the estimated translational vector $\Delta\vec{p}$, estimated rotation unit vector $\vec{e}$ and estimated rotation angle $\Delta\theta$;

eighth means for calculating a revised command velocity of each of the actuators by reducing the command velocity of each of the actuators by a same rate so that any one of the revised command velocities of the actuators does not exceed a predetermined maximum allowable velocity of a concerned actuator; and

ninth means for driving each of the actuators with the revised command velocity.

6. An apparatus for controlling an industrial robot as claimed in claim 5, wherein said seventh means comprises:

means for providing a Jacobian matrix to be used in calculating translational and rotational velocities of the hand based on the velocities of the actuators;

means for calculating an estimated translational velocity vector $\vec{v}$ indicating an estimated velocity of a translational movement of the hand from the present position toward the target position and a rotational velocity vector $\vec{w}$ indicating an estimated velocity of a rotational movement of the hand from the present posture toward the target posture, by the following relationships:

$$\vec{v} = \Delta\vec{p}/T, \quad \vec{w} = \Delta\theta\vec{e}/T$$

and

means for calculating the command velocity of each of the actuators based on the estimated translational and rotational velocities $\vec{v}$, $\vec{w}$ of the hand by using an inverse matrix of said Jacobian matrix.

7. An apparatus for controlling an industrial robot as claimed in claim 5, wherein said seventh means comprises:

means for calculating an estimated position vector $\vec{p}'$, and estimated posture unit vectors $\vec{f}'$, $\vec{g}'$ indicating an estimated position and an estimated posture of the hand after the sampling time interval T by the following relationships:

$$\vec{p}' = \vec{p} + \Delta\vec{p}, \quad (\vec{f}', \vec{g}') = \Delta\theta\vec{e} \times (\vec{f}, \vec{g})$$

means for calculating estimated displacements of the actuators after the sampling time interval T based on the estimated position vector $\vec{p}'$, and estimated posture unit vectors $\vec{f}'$, $\vec{g}'$;

means for calculating, for each of the actuators, a difference between the estimated displacement and the present displacement; and

means for calculating the command velocity of each of the actuators by dividing said difference by the sampling time interval T.

8. An apparatus for controlling an industrial robot as claimed in any one of claims 5 to 7, wherein said fourth means comprises:

means for providing a projected translational velocity V of the hand; and

means for calculating the projected translational distance VT by multiplying the projected translational velocity V by the sampling time interval T.

**Patentansprüche**

1. Verfahren zur Steuerung eines Industrieroboters unter Bewegen einer an einem Vorderende desselben vorgesehenen Hand entlang einer vorbestimmten Bewegungsbahn derart, daß die Geschwindigkeiten von Handbetätigungs - Stellantrieben einen zulässigen Höchstwert nicht überschreiten, gekennzeichnet durch

. einen ersten Schritt, in dem eine Ist-Verschiebung jedes einer Mehrzahl Stellantriebe zum Bewegen der Hand gelesen wird;

einen zweiten Schritt; in dem momentan ein Istlagevektor $\vec{p}$, der eine Istlage der Hand bezeichnet, und Isthaltungs-Einheitsvektoren $\vec{f}$, $\vec{g}$, die eine Isthaltung der Hand bezeichnen, auf der Basis der Ist-Verschiebungen der Stellantriebe errechnet werden,

einen dritten Schritt, in dem ein Abtastzeitintervall T zur Steuerung der Hand bereitgestellt wird;

einen vierten Schritt, in dem eine Größe V einer Verschiebebewegung der Hand bereitgestellt wird;

einen fünften Schritt, in dem ein Soll-Lagevektor $\vec{p}_f$, der eine Soll-Lage der Hand bezeichnet, und Sollhaltungs-Einheitsvektoren $\vec{f}_f$, $\vec{g}_f$, die eine Sollhaltung der Hand bezeichnen, bereitgestellt werden;

einen sechsten Schritt, in dem ein geschätzter Verschiebevektor $\Delta\vec{p}$, der eine geschätzte Verschiebebewegung der Hand aus der Istlage in Richtung zur Soll-Lage während des Abtastzeitintervalls T, ein geschätzter Rotations-Einheitsvektor $\vec{e}$, der ein Rotationsachse der Hand aus der Isthaltung in Richtung zur Sollhaltung, und ein geschätzter Rotationswinkel $\Delta\theta$ der Hand um den Rotations-Einheitsvektor $\vec{e}$ aus der Isthaltung in Richtung zur Sollhaltung während des Abtastzeitintervalls T bezeichnet, durch die folgenden Beziehungen errechnet werden:

$$\Delta\vec{p} = \frac{VT}{|\vec{p}_f - \vec{p}|}(\vec{p}_f - \vec{p})$$

$$\vec{e} = (\vec{f}_f - \vec{f}) \times (\vec{g}_f - \vec{g})/|(\vec{f}_f - \vec{f}) \times (\vec{g}_f - \vec{g})|$$

$$\Delta\theta = \frac{2VT}{|\vec{p}_f - \vec{p}|} \tan^{-1} \frac{\vec{e} \cdot (\vec{g} \times \vec{g}f)}{\vec{g} \cdot \vec{g}_f - 2(\vec{e} \cdot \vec{g})^2 + 1}$$

einen siebten Schritt, in dem eine Führungs-Geschwindigkeit jedes der Stellantriebe auf der Basis des geschätzten Verschiebevektors $\Delta\vec{p}$, des geschätzten Rotations-Einheitsvektors $\vec{e}$ und des geschätzten Rotationswinkels $\Delta\theta$ errechnet wird;

einen achten Schritt, in dem eine korrigierte Führungs-Geschwindigkeit jedes der Stellantriebe unter Verminderung der Führungs-Geschwindigkeit jedes Stellantriebs um die gleiche Rate errechnet wird, so daß keine der korrigierten Führungs-Geschwindigkeiten der Stellantriebe eine vorbestimmte maximal zulässige Geschwindigkeit eines jeweiligen Stellantriebs überschreitet; und

einen neunten Schritt, in dem jeder Stellantrieb mit der korrigierten Führungs-Geschwindigkeit angetrieben wird.

2. Verfahren zur Steuerung eines Industrieroboters nach Anspruch 1, wobei der siebte Schritt folgende Schritte umfaßt:

Vorsehen einer Jacobischen Matrix, die für die Berechnung von Verschiebe- und Rotationsgeschwindigkeiten der Hand auf der Grundlage von Geschwindigkeiten der Stellantriebe zu verwenden ist;

Errechnen eines geschätzten Verschiebegeschwindigkeitsvektors $\vec{v}$, der eine geschätzte Geschwindigkeit einer Verschiebebewegung der Hand aus der Istlage in Richtung zur Soll-Lage bezeichnet, und eines Rotationsgeschwindigkeitsvektors $\vec{w}$, der eine geschätzte Geschwindigkeit einer Rotationsbewegung der Hand aus der Isthaltung in Richtung zur Sollhaltung bezeichnet, durch die folgenden Beziehungen;

$$\vec{v} = \vec{\Delta p}/T, \quad \vec{w} = \vec{\Delta \theta e}/T$$

und

Errechnen der Führungs-Geschwindigkeit jedes Stellantriebs auf der Basis der geschätzten Verschiebe- und Rotationsgeschwindigkeiten $\vec{v}$, $\vec{w}$ der Hand unter Anwendung einer invertierten Matrix der genannten Jacobischen Matrix.

3. Verfahren zur Steuerung eines Industrieroboters nach Anspruch 1, wobei der siebte Schritt die Schritte umfaßt:

Errechnen eines geschätzten Lagevektors $\vec{p}'$ und von geschätzten Haltungs-Einheitsvektoren $\vec{f}'$, $\vec{g}'$, die eine geschätzte Lage und eine geschätzte Haltung der Hand nach dem Abtastzeitintervall T bezeichnen, durch die folgenden Beziehungen:

$$\vec{p}' = \vec{p} + \vec{\Delta p}, \quad (\vec{f}', \vec{g}') = \vec{\Delta \theta e} \times (\vec{f}, \vec{g})$$

Errechnen geschätzter Verschiebungen der Stellantriebe nach dem Abtastzeitintervall T auf der Grundlage des geschätzten Lagevektors $\vec{p}'$ und der geschätzten Haltungs-Einheitsvektoren $\vec{f}'$, $\vec{g}'$;

Errechnen einer Differenz zwischen der geschätzten Verschiebung und der Ist-Verschiebung für jeden Stellantrieb; und

Errechnen der Führungs-Geschwindigkeit jedes Stellantriebs durch Division der Differenz durch das Abtastzeitintervall T.

4. Verfahren zur Steuerung eines Industrieroboters nach einem der Ansprüche 1—3, wobei der vierte Schritt die Schritte umfaßt:

Bereitstellen einer projizierten Verschiebegeschwindigkeit V der Hand; und

Errechnen der projizierten Verschiebeentfernung vT durch Multiplikation der projizierten Verschiebegeschwindigkeit V mit dem Abtastzeitintervall T.

5. Einrichtung zur Steuerung eines Industrieroboters derart, daß eine an einem Vorderende desselben vorgesehene Hand sich entlang einer vorbestimmten Bewegungsbahn bewegt derart, daß die Geschwindigkeiten von Handbetätigungs - Stellantrieben einen zulässigen Höchstwert nicht überschreiten, umfassend:

erste Mittel zum Lesen einer Ist-Verschiebung jedes einer Mehrzahl Stellantriebe zum Bewegen der Hand; zweite Mittel zum momentanen Errechnen eines Istlagevektors $\vec{p}$, der eine Istlage der Hand bezeichnet, und von Isthaltungs-Einheitsvektoren $\vec{f}$, $\vec{g}$, die eine Isthaltung der Hand bezeichnen, auf der Basis der Ist-Verschiebungen der Stellantriebe;

dritte Mittel zur Bereitstellung eines Abtastzeitintervalls T zur Steuerung der Hand;

vierte Mittel zur Bereitstellung einer Größe V einer Verschiebebewegung der Hand;

fünfte Mittel zur Bereitstellung eines Soll-Lagevektors $\vec{p_f}$, der eine Soll-Lage der Hand bezeichnet, und von Sollhaltungs-Einheitsvektoren $\vec{f_f}$, $\vec{g_f}$, die eine Sollhaltung der Hand bezeichnen;

sechste Mittel zum Errechnen eines geschätzten Verschiebevektors $\vec{\Delta p}$, der eine geschätzte Verschiebebewegung der Hand aus der Istlage in Richtung zur Soll-Lage während des Abtastzeitintervalls T, eines geschätzten Rotations-Einheitsvektors $\vec{e}$, der eine Rotationsachse der Hand aus der Isthaltung in Richtung zur Sollhaltung, und eines geschätzten Rotationswinkels $\Delta \theta$ der Hand um den Rotations-Einheitsvektor $\vec{e}$ aus der Isthaltung in Richtung zur Sollhaltung während des Abtastzeitintervalls T bezeichnet, durch die folgenden Beziehungen:

$$\vec{\Delta p} = \frac{VT}{|\vec{p_f} - \vec{p}|}(\vec{p_f} - \vec{p})$$

$$\vec{e} = (\vec{f_f} - \vec{f}) \times (\vec{g_f} - \vec{g})/|(\vec{f_f} - \vec{f}) \times (\vec{g_f} - \vec{g})|$$

$$\Delta \theta = \frac{2VT}{|\vec{p_f} - \vec{p}|} \tan^{-1} \frac{\vec{e} \cdot (\vec{g} \times \vec{g_f})}{\vec{g} \cdot \vec{g_f} - 2(\vec{e} \cdot \vec{g})^2 + 1}$$

siebte Mittel zum Errechnen einer Führungs-Geschwindigkeit jedes der Stellantriebe auf der Basis des geschätzten Verschiebevektors $\vec{\Delta p}$, des geschätzten Rotations-Einheitsvektors $\vec{e}$ und des geschätzten Rotationswinkels $\Delta \theta$;

achte Mittel zum Errechnen einer korrigierten Führungs-Geschwindigkeit jedes der Stellantriebe unter Verminderung der Führungs-Geschwindigkeit jedes Stellantriebs um die gleiche Rate, so daß keine der korrigierten Führungs-Geschwindigkeiten der Stellantriebe eine vorbestimmte maximal zulässige Geschwindigkeit eines jeweiligen Stellantriebs überschreitet; und

neunte Mittel zum Antreiben jedes Stellantriebs mit der korrigierten Führungs-Geschwindigkeit.

6. Einrichtung zur Steuerung eines Industrieroboters nach Anspruch 5, wobei die siebten Mittel umfassen:

Mittel zur Bereitstellung einer Jacobischen Matrix, die für die Berechnung von Verschiebe- und Rotationsgeschwindigkeiten der Hand auf der Grundlage von Geschwindigkeiten der Stellantriebe zu verwenden ist;

Mittel zum Errechnen eines geschätzten Verschiebegeschwindigkeitsvektors $\vec{v}$, der eine geschätzte Geschwindigkeit einer Verschiebebewegung der Hand aus der Istlage in Richtung zur Soll-Lage bezeichnet, und eines Rotationsgeschwindigkeitsvektors $\vec{w}$, der eine geschätzte Geschwindigkeit einer Rotationsbewegung der Hand aus der Isthaltung in Richtung zur Sollhaltung bezeichnet, durch die folgenden Beziehungen:

$$\vec{v}=\vec{\Delta p}/T, \quad \vec{w}=\Delta\theta\vec{e}/T$$

und

Mittel zum Errechnen der Führungs-Geschwindigkeit jedes Stellantriebs auf der Basis der geschätzten Verschiebe- und Rotationsgeschwindigkeiten $\vec{v}$, $\vec{w}$ der Hand unter Anwendung einer invertierten Matrix der genannten Jacobischen Matrix.

7. Einrichtung zur Steuerung eines Industrieroboters nach Anspruch 5, wobei die siebten Mittel umfassen;

Mittel zum Errechnen eines geschätzten Lagevektors $\vec{p}'$ von geschätzten Haltungs-Einheitsvektoren $\vec{f}'$, $\vec{g}'$, die eine geschätzte Lage und eine geschätzte Haltung der Hand nach dem Abtastzeitintervalls T bezeichnen, durch die folgenden Beziehungen:

$$\vec{p}'=\vec{p}+\vec{\Delta p}, \quad (\vec{f}', \vec{g}')=\Delta\theta\vec{e}\times(\vec{f}, \vec{g})$$

Mittel zum Errechnen geschätzter Verschiebungen der Stellantriebe nach dem Abtastzeitintervall T auf der Grundlage des geschätzten Lagevektors $\vec{p}'$ und der geschätzten Haltungs-Einheitsvektoren $\vec{f}'$, $\vec{g}'$;

Mittel zum Errechnen einer Differenz zwischen der geschätzten Verschiebung und der Ist-Verschiebung für jeden Stellantrieb; und

Mittel zum Errechnen der Führungs-Geschwindigkeit jedes Stellantriebs durch Division der Differenz durch das Abtastzeitintervall T.

8. Einrichtung zur Steuerung eines Industrieroboters nach einem der Ansprüche 5—7, wobei die vierten Mittel umfassen:

Mittel zum Bereitstellen einer projizierten Verschiebegeschwindigkeit V der Hand; und

Mittel zum Errechnen der projizierten Verschiebeentfernung vT durch Multiplikation der projizierten Verschiebegeschwindigkeit V mit dem Abtastzeitintervall T.

**Revendications**

1. Procédé pour commander un robot industriel en vue de déplacer une main située sur une extrémité avant du robot, le long d'une trajectoire prédéterminée de déplacement, de manière que les vitesses d'actionneurs actionnant la main ne dépassent pas une valeur maximale admissible, caractérisé par

une première étape de lecture d'un déplacement actuel de chaque actionneur faisant partie d'une pluralité d'actionneurs servant à déplacer la main;

une seconde étape de calcul à l'instant présent, d'un vecteur de position actuelle $\vec{p}$ indiquant une position actuelle de la main et des vecteurs unités d'attitude actuelle $\vec{f}$, $\vec{g}$ indiquant une attitude actuelle de la main sur la base du déplacement actuel des actionneurs;

une troisième étape de délivrance d'un intervalle de temps d'échantillonnage T pour commander la main;

une quatrième étape de délivrance d'une amplitude V d'un mouvement de translation de la main;

une cinquième étape de délivrance d'un vecteur de position cible $\vec{p}_t$ indiquant une position cible de la main et des vecteurs unités d'attitude cible $\vec{f}_t$, $\vec{g}_t$ indiquant une attitude cible de la main;

une sixième étape de calcul d'un vecteur de translation estimé $\vec{\Delta p}$ indiquant un mouvement de translation estimé de la main depuis la position actuelle en direction de la position cible pendant l'intervalle de temps d'échantillonnage T, un vecteur unité de rotation estimée $\vec{e}$ indiquant un axe de rotation de la main depuis l'attitude actuelle en direction de l'attitude cible et un angle de rotation estimé $\Delta\theta$ de la main autour du vecteur unité de rotation $\vec{e}$ depuis l'attitude actuelle en direction de l'attitude cible pendant l'intervalle de temps d'échantillonnage T, conformément aux relations suivantes:

$$\vec{\Delta p}=\frac{VT}{|\vec{p_t}-\vec{p}|}(\vec{p_t}-\vec{p})$$

$$\vec{e}=(\vec{f_t}-\vec{f})\times(\vec{g_t}-\vec{g})/|(\vec{f_t}-\vec{f})\times(\vec{g_t}-\vec{g})|$$

$$\Delta\theta=\frac{2VT}{|\vec{p_t}-\vec{p}|}\ tg^{-1}\ \frac{\vec{e}\cdot(\vec{g}\times\vec{g_t})}{\vec{g}\cdot\vec{g_t}-2\ (\vec{e}\cdot\vec{g})^2+1}$$

une septième étape de calcul d'une vitesse de commande de chacun des actionneurs sur la base du vecteur de translation estimée $\vec{\Delta p}$, du vecteur unité de rotation estimée $\vec{e}$ et de l'angle de rotation estimé $\Delta\theta$;

une huitième étape de calcul d'une vitesse de commande révisée de chacun des actionneurs au moyen d'une réduction, d'un même degré, de la, vitesse de commande de chacun des actionneurs de telle sorte qu'aucune des vitesses de commande révisées des actionneurs ne dépasse une vitesse admissible maximale prédéterminée d'un actionneur concerné; et

une neuvième étape d'entraînement de chacun des actionneurs à la vitesse de commande révisée.

2. Procédé pour commander un robot industriel selon la revendication 1, selon lequel la septième étape inclut les étapes consistant à:

établir une matrice jacobienne devant être utilisée pour le calcul des vitesses de translation et de rotation de la main sur la base de vitesses des actionneurs;

calculer un vecteur vitesse de translation estimée $\vec{v}$ indiquant une vitesse estimée d'un mouvement de translation de la main depuis la position actuelle en direction de la position cible, et une vecteur vitesse de rotation $\vec{w}$ indiquant une vitesse estimée d'un mouvement de rotation de la main depuis l'attitude actuelle en direction de l'attitude cible, conformément aux relations suivantes:

$$\vec{v}=\Delta\vec{p}/t, \quad \vec{w}=\Delta\theta\vec{e}/T$$

et

calculer la vitesse de commande de chacun des actionneurs sur la base de la vitesse de translation et de la vitesse de rotation estimées $\vec{v}, \vec{w}$ de la main moyennant l'utilisation d'une matrice inverse de ladite matrice jacobienne.

3. Procédé pour commander un robot industriel selon la revendication 1, selon lequel ladite septième étape inclut les étapes consistant à:

calculer un vecteur de position estimée $\vec{p}'$, et des vecteurs unités d'attitude estimée $\vec{f}', \vec{g}'$ indiquant une position estimée et une attitude estimée de la main après l'intervalle de temps d'échantillonnage T, conformément aux relations suivantes:

$$\vec{p}'=\vec{p}+\Delta\vec{p}, \quad (\vec{f}', \vec{g}')=\Delta\theta\vec{e}\times(\vec{f}, \vec{g})$$

calculer des déplacements estimés des actionneurs après l'intervalle de temps d'échantillonnage T, sur la base du vecteur de position estimée $\vec{p}'$ et des vecteurs unités d'attitude estimée $\vec{f}', \vec{g}'$;

calculer, pour chacun des actionneurs, une différence entre le déplacement estimé et le déplacement actuel; et

calculer la vitesse de commande de chacun des actionneurs en divisant ladite différence par l'intervalle de temps d'échantillonnage T.

4. Procédé pour commander un robot industriel selon l'une quelconque des revendications 1 à 3, dans lequel ladite quatrième étape inclut des étapes consistant à:

établir une vitesse de translation projetée V de la main; et

calculer la distance de translation projetée VT par multiplication de la vitesse de translation projetée V par l'intervalle de temps d'échantillonnage T.

5. Dispositif pour commander un robot industriel de manière qu'une main prévue sur une extrémité avant du robot se déplace le long d'une trajectoire déterminée de déplacement de manière que les vitesses des actionneurs actionnant la main ne dépassent pas une valeur maximale admissible, comprenant:

des premiers moyens pour lire un déplacement actuel de chacun des actionneurs d'une pluralité d'actionneurs servant à déplacer la main;

des seconds moyens pour calculer à un instant présent, un vecteur de position actuelle $\vec{p}$ indiquant une position actuelle de la main, et des vecteurs unités d'attitude actuelle $\vec{f}, \vec{g}$ indiquant une attitude actuelle de la main sur la base des déplacements actuels des actionneurs;

des troisièmes moyens servant à délivrer un intervalle de temps d'échantillonnage T pour commander la main;

des quatrièmes moyens servant à délivrer une amplitude d'un mouvement de translation de la main;

des cinquièmes moyens pour délivrer un vecteur de position cible $\vec{p}_f$ indiquant une position cible de la main et des vecteurs unités de position cible $\vec{f}_f, \vec{g}_f$ indiquant une attitude de cible de la main;

des sixièmes moyens servant à calculer un vecteur de translation estimée $\Delta\vec{p}$ indiquant un mouvement de translation estimé de la main depuis la position actuelle en direction de la position cible pendant l'intervalle de temps d'échantillonnage T, un vecteur unité de rotation estimée $\vec{e}$ indiquant un axe de rotation de la main depuis l'attitude actuelle en direction de l'attitude cible et un angle de rotation estimé $\theta$ de la main autour du vecteur unité de rotation $\vec{e}$ depuis l'attitude actuelle en direction de l'attitude cible pendant l'intervalle de temps d'échantillonnage T, conformément aux relations suivantes:

$$\Delta\vec{p}=\frac{VT}{|\vec{p}_f-\vec{p}|}(\vec{p}_f-\vec{p})$$

$$e=(\vec{f}_f-\vec{f})\times(\vec{g}_f-\vec{g})/|(\vec{f}_f-\vec{f})\times(\vec{g}_f-\vec{g})|$$

$$\Delta\theta=\frac{2VT}{|\vec{p}_f-\vec{p}|}\ tg^{-1}\frac{\vec{e}\cdot(\vec{g}\times\vec{g}_f)}{\vec{g}\cdot\vec{g}_f-2(\vec{e}\cdot\vec{g})^2+1}$$

des septièmes moyens pour calculer une vitesse de commande de chacun des actionneurs sur la base du vecteur de translation estimée $\Delta\vec{p}$, du vecteur unité de rotation estimée $\vec{e}$ et de l'angle de rotation $\Delta\theta$;

des huitièmes moyens pour calculer une vitesse de commande révisée de chacun des actionneurs au moyen d'une réduction, d'un même degré, de la vitesse de commande de chacun des actionneurs de telle sorte qu'aucune des vitesses de commande révisées des actionneurs ne dépasse une vitesse admissible maximale prédéterminée d'un actionneur concerné; et

des neuvièmes moyens pour entraîner chacun des actionneurs avec la vitesse de commande révisée.

6. Dispositif pour commander un robot industriel selon la revendication 5, dans lequel lesdits septièmes moyens comprennent

des moyens pour établir une matrice jacobienne devant être utilisée pour le calcul des vitesses de translation et de rotation de la main sur la base de vitesses des actionneurs;

des moyens pour calculer un vecteur vitesse de translation estimée $\vec{v}$ indiquant une vitesse estimée d'un mouvement de translation de la main depuis la position actuelle en direction de la position cible, et un vecteur vitesse de rotation $\vec{w}$ indiquant une vitesse estimée d'un mouvement de rotation de la main depuis l'attitude actuelle en direction de l'attitude cible, conformément aux relation suivantes:

$$\vec{v}=\Delta\vec{p}/\vec{t}, \quad \vec{w}=\Delta\theta\vec{e}/T$$

et

des moyens pour calculer la vitesse de commande de chacun des actionneurs sur la base de la vitesse de translation et de la vitesse de rotation estimées $\vec{v}$, $\vec{w}$ de la main moyennant l'utilisation d'une matrice inverse de ladite matrice jacobienne.

7. Dispositif pour commander un robot industriel selon la revendication 5, dans lequel lesdits septièmes moyens comprennent:

des moyens pour calculer un vecteur de position estimée $\vec{p}'$, et des vecteurs unités d'attitude estimée $\vec{f}'$, $\vec{g}'$, indiquant une position estimée et une attitude estimée de la main après l'intervalle de temps d'échantillonnage T, conformément aux relations suivantes:

$$\vec{p}'=\vec{p}+\Delta\vec{p}, \quad (\vec{f}', \vec{g}')=\Delta\theta\vec{e}\times(\vec{f}, \vec{g})$$

des moyens pour calculer des déplacements estimés des actionneurs après l'intervalle de temps d'échantillonnage T, sur la base du vecteur de position estimée $\vec{p}'$, et des vecteurs unités d'attitude estimée $\vec{f}'$, $\vec{g}'$;

des moyens pour calculer, pour chacun des actionneurs, une différence entre le déplacement estimé et le déplacement actuel; et

des moyens pour calculer la vitesse de commande de chacun des actionneurs par division de ladite différence par l'intervalle de temps d'échantillonnage T.

8. Dispositif pour commander un robot industriel selon l'une quelconque des revendications 5 à 7, dans lequel lesdits quatrièmes moyens comprennent:

des moyens pour établir une vitesse de translation projetée V de la main; et

des moyens pour calculer la distance de translation projetée VT par multiplication de la vitesse de translation projetée V par l'intervalle de temps d'échantillonnage T.

FIG. 1

FIG. 2

0 086 950

FIG. 3

$\boxed{\text{START}}$

READ-OUT $\theta_1 \sim \theta_6$ FROM ENCODER COUNTER

CALCULATE POSITION AND POSTURE OF HAND $\overline{p}$, $\overline{f}$, $\overline{g}$

TARGET POSITION ?  —— YES

NO

END

CALCULATE $\overline{v}$, $\overline{w}$ ON TARGET VALUE $\overline{p_f}$, $\overline{f_f}$, $\overline{g_f}$ AND $\overline{p}$, $\overline{f}$, $\overline{g}$

CALCULATE JACOBIAN MATRIX J

CALCULATE $\dot{\theta}_1 \sim \dot{\theta}_6$

$i = 1$ , $a = 1$

$a \leqq \dfrac{\dot{\theta}_{i\ max}}{|\dot{\theta}_i|}$ ? —— NO

$a = \dot{\theta}_{i\ max} / |\dot{\theta}_i|$

YES

$i = 6$ ? —— NO

$i = i + 1$

YES

$\dot{\theta}_1 = a\dot{\theta}_i$ , $\dot{\theta}_2 = a\dot{\theta}_2$ , ...... , $\dot{\theta}_6 = a\dot{\theta}_6$

OUTPUT

2